# EUROPEAN PATENT APPLICATION

(11) **EP 2 819 053 A1**
(43) Date of publication of application: **31.12.2014**
(21) Application number: 13174109.2
(22) Date of filing: 27.06.2013
(51) Int. Cl.: G06F 21/53, G06F 21/55, G06F 21/56

(54) **Diagnosing a device in an automation and control system**

(71) Applicant: ABB Technology AG, 8050 Zürich (CH)
(72) Inventor: Obermeier, Sebastian, 5107 Schinznach-Dorf (CH); Locher, Thomas, 8050 Zürich (CH); Hristova, Ana, 5400 Baden (CH); Schlegel, Roman, 3098 Köniz (CH)
(74) Representative: ABB Patent Attorneys

(57) **Abstract**

A method of diagnosing a device (12) in an automation and control system (10) comprises the steps of: instantiating a first and a second virtual machine (30a, 30b) managed by a hypervisor (28), the first and second virtual machine sharing hardware resources (26) of the device (12); enabling, by the hypervisor (28), a read-only access from the first virtual machine (30a) to the second virtual machine (30b); running an industrial automation and control system application (38) in the second virtual machine (30b); and running a diagnosing application (34) in the first virtual machine (30a) configured to analyze the second virtual machine (30b) and to identify threats to the industrial automation and control system application (38).

## Description

### FIELD OF THE INVENTION

The invention relates to a method of diagnosing a device in an automation and control system, a device in an automation and control system and an automation and control system.

### BACKGROUND OF THE INVENTION

Computer forensics may be used for examining digital media with the goal of identifying threats to computer systems that are configured to read the digital media. Computer forensics is usually done offline, after making a bit-by-bit copy of the digital media like, for example, a physical drive of a computer system. Usually, there is only little support for doing this thoroughly in real time on a live system without tampering with the computer system.

For example, with computer forensics the nature and the extent of an incident are determined by analyzing files stored in the computer system. The goal may be to determine whether malicious software (e.g., malware, Trojans, viruses) has been completely removed from the system, and/or whether installed applications are not affected, i.e., that the virus did not spread to additional files.

Real-time industrial automation and control systems, which usually comprise a plurality of field devices interconnected by a digital communication network, often use computer technology in the respective devices, and are thus also susceptible to attacks and threats. The security of an industrial automation and control system may be jeopardized in many ways. When examining the status and/or diagnosing of an industrial automation and control system, the following questions may arise:

Is the industrial automation and control system, although (still) operating in apparent good order, compromised by malicious software, e.g., a virus or Trojan that has not yet been activated?

A suspicious, untrusted application has been installed, which has been downloaded from the internet to improve the operating system. Has that application changed parts that are relevant for the industrial automation and control system?

In order to answer these questions, computer forensics may help to determine whether and how the industrial automation and control system has changed from the initial, known good state.

Unfortunately, performing such computer forensics on a computer system usually requires the system to be shut down and to have the information extracted. This may result in a loss of production and may be therefore executed only in very rare cases where the industrial automation and control system cannot be operated anyway due to the incident. However, a compromised industrial automation and control system may have a severe impact: The malicious software may send out information about the industrial automation and control system, revealing potentially sensitive or secret information to an attacker. Moreover, the malicious code may also cause a disruption of the industrial automation and control system.

Computer forensics may be especially helpful to answer the question whether the system has been compromised or not; however, industrial automation and control system owners are resistant to stop the industrial process in order to run such a test - which may reveal that everything is fine.

There are approaches for performing forensics in the IT world without having to stop the affected servers ("live computer forensics"). These approaches usually copy a piece of software ("acquisition tool") to the machine under investigation, which then extracts the contents of the hard disk and main memory. The problem with such an approach may be that the compromised machine can tamper with the information that is to be acquired by the forensic acquisition tool, e.g., it may hide the malicious software from the computer forensics and may produce some original or unaltered data in a response to the acquisition tool.

### DESCRIPTION OF THE INVENTION

It is an object to provide a safe and secure industrial automation and control system.

This object is achieved by the subject-matter of the independent claims. Further exemplary embodiments are evident from the dependent claims and the following description.

A first aspect of the invention relates to a method of diagnosing an (embedded) device in an automation and control system, in particular a method of performing computer forensics and/or forensic analysis on the device. For example, the device may be a field device of the automation and control system, which field device may comprise a sensor and/or actuator or may be configured to control a sensor and/or actuator.

In general, the device may comprise a computer (with at least a processor and a device memory), which is adapted to run applications of the automation and control system, for example, control applications for a sensor and/or an actuator.

According to an embodiment of the invention, the method comprises the steps of: instantiating a first and a second virtual machine managed by a hypervisor, the first and second virtual machine sharing hardware resources of the device; enabling or providing, by the hypervisor, the first virtual machine to access, in a read-only mode, to information or data stored in a memory of the second virtual machine; running an industrial automation and control system application in the second virtual machine; and running in parallel a diagnosing application in the first virtual machine configured to analyze the information read from the second virtual machine and to identify present and future cyber security threats to (an intended operation of) the industrial automation and control system application.

In other words, in the device two virtual machines may be instantiated, wherein in a second virtual machine the industrial automation and control system application is run and in the first virtual machine a diagnosing application is run. There may be only an access from the diagnosing application to the industrial automation and control system application and not vice versa. Thus, a threat (such as a virus) in the industrial automation and control system application may be identified but the compromised industrial automation and control system application is not able to interfere with the diagnosing application or alter the data of the diagnosing application.

The virtual machines may be instantiated in a hypervisor, that is also known as virtual machine manager or virtual machine monitor, which may be a software component in the device managing the access of the applications running in the virtual machines to hardware resources of the device. Usually, a hypervisor strictly separates all virtual machines from each other. However, the hypervisor of the device allows constructing a classical device system in a separate virtual machine that is only accessible from a forensic virtual machine running the diagnosing application, but not vice versa.

With the method, a mechanism is provided that allows protecting industrial automation and controlling system against digital threats without having to shut down the industrial automation and control system.

According to an embodiment of the invention, the method further comprises the step of: denying access from the second virtual machine to the first virtual machine by the hypervisor. In such a way, a possible malicious application cannot affect the diagnosing application in the other virtual machine.

According to an embodiment of the invention, the diagnosing application and/or the analysis of the diagnosing application is not detectable for the second virtual machine. For example, no additional components for diagnosis/analysis need to be installed in the second virtual machine. The diagnosing application as well as the first virtual machine may be completely transparent for the industrial automation and control application running in the second virtual machine. Also, the second virtual machine may be transparent for the industrial automation and control application.

Computer forensics may be performed in a running industrial automation and control system, while still guaranteeing the integrity of the information on the system and allowing continuous operation. The method does not require the system to be shut down and may be non-intrusive, i.e., it does not require the installation of forensic software on the target machine. Therefore, the approach is also suited for embedded real-time devices.

According to an embodiment of the invention, the method further comprises the step of: running the diagnosing application concurrently with the industrial automation and control system application. In other words, the diagnosing application may be run simultaneously with the industrial automation and control application. It has to be understood that this also may be possible, when the two applications are run (in time intervals one after the other) in two different threads in one processor core. The diagnosing application may be configured to perform a live forensic analysis of the second virtual machine and/or the industrial automation and control system application. The analysis of the second virtual machine and the application running in it may be executed in real-time, i.e. continuously / permanently, or periodically / repeatedly.

The analysis of the diagnosing application may be seen as a live computer forensics for the industrial automation and control system (or the device), in which a hypervisor is used that runs distinct virtual machines for the operating system and the diagnosing application in parallel on the same device. The diagnosing application may be seen as a live forensic component.

According to an embodiment of the invention, the method further comprises the steps of: instantiating a third virtual machine and running a second industrial automation and control system application in the third virtual machine; and furthermore enabling read-only access from the first virtual machine to the third virtual machine. It is possible that not only two virtual machines are instantiated in the device. There may be more than one virtual machines (at least a second and a third virtual machine) for running industrial automation and control system applications in different virtual machines. Access may be denied between these virtual machines. The diagnosing application may analyze all virtual machines instantiated in the device.

According to an embodiment of the invention, the hypervisor enables a read-only access to data stored in a virtual memory of the second virtual machine, including data from a RAM or other volatile memory, and/or to files stored in a virtual drive of the second virtual machine. The diagnosing application is configured to analyze the data and/or the files of the second virtual machine. The hypervisor may provide a dedicated virtual memory and/or a dedicated virtual drive for each virtual machine, which are not accessible by other virtual machines also running other industrial automation and control system applications. Only the virtual machine running the diagnosing application may have access to the memory resources of the industrial automation and control system application.

According to an embodiment of the invention, a first operating system is executed in the first virtual machine and a second operating system is executed in the second virtual machine. The diagnosing application may be configured to run on the first operating system and the industrial automation and control system application may be configured to run on the second operating system. Both operation systems may be equal or may be distinct from each other. The hypervisor may manage multiple instances of (guest) operating systems that may share (virtualized) hardware resources of the device. A guest operating system thus runs on another level above the hypervisor. The guest operating system and the applications running on the operating system including any malware may be completely oblivious (ignorant as) to the diagnosing application and cannot interfere with it.

According to an embodiment of the invention, the method further comprises the step of: providing, by the hypervisor, a first virtual network interface for the first virtual machine and a second virtual network interface for the second virtual machine. Also, the network resources of the device may be provided as virtual network interfaces in the virtual machine.

According to an embodiment of the invention, the method further comprises the step of: transferring data for the analysis from the second virtual machine to the first virtual machine via the first and second virtual network interfaces. For example, the hypervisor may use the virtual network interfaces to read data from the second virtual machine and to provide this data via the first virtual network interface to the diagnosing application in the first virtual machine. In this way, even the access from the diagnosing application to the second virtual machine may be restricted by the hypervisor.

According to an embodiment of the invention, the method further comprises the step of: transferring a result from the analysis to an external database via the virtual network interface. The diagnosing application may send the analysis result to an external database, which may be accessed by an operator to supervise the state of the devices of the industrial automation and control system.

According to an embodiment of the invention, the hypervisor comprises an authentication module for accessing the first virtual machine and/or diagnosing application in the first virtual machine via the first virtual network interface. It is also possible that an operator or an external process connects to the first virtual machine via a data communication network. This access may be restricted by the authentication module, which may grant an access to the first virtual machine via the first virtual network interface. Via this connection, an operator or external process may read out analysis data of the diagnosing application and/or may configure the diagnosing application.

According to an embodiment of the invention, the method further comprises the step of: running the first virtual machine and the second virtual machine in different processor cores of a multi-core-processor of the device.

According to an embodiment of the invention, the method further comprises the step of: running the hypervisor in a different processor core as the first and second virtual machine.

Specifically, the method may be performed on a single multi-core machine with at least one core dedicated to each the hypervisor, the diagnosing application, and the industrial automation and control system application. In this way, the hypervisor may respect the real-time constraints on the operating systems and its applications.

According to an embodiment of the invention, the hypervisor is at least partially implemented in hardware in the device. However, it may be possible that the hypervisor is a software component. Also, the diagnosing application, the industrial automation and control application and the operating system may be software components.

According to an embodiment of the invention, the diagnosing application is configured for performing a (permanent) virus scan of the second virtual machine. For example, the diagnosing application may search malware, viruses and Trojans that may have entered the second virtual machine, for example via the virtual network interface provided by the hypervisor.

According to an embodiment of the invention, the diagnosing application is configured for (permanently) generating hash values of data and/or files of the industrial automation and control system application and for comparing the hash values with verified hash values. In this way, the diagnosing application may search for unwanted changes in the software and/or the data in the second virtual machine.

A further aspect of the invention relates to a device of an industrial automation and control system. The device may be configured to perform the method as described in the above and the following.

According to an embodiment of the invention, the device comprises a hypervisor (module) configured to instantiate a first and a second virtual machine managed by a hypervisor, such that the first and second virtual machine share hardware resources of the device. The hypervisor may be configured to enable a read-only access from the first virtual machine to the second virtual machine. The device furthermore may comprise an industrial automation and control system application configured to run in the second virtual machine and a diagnosing application configured to run in the first virtual machine and configured to analyze the second virtual machine and to identify threats to the industrial automation and control system application. These applications may be stored in a permanent memory of the device.

A further aspect of the invention relates to an industrial automation and control system, which comprises a plurality of devices, which are configured for performing a self-diagnosis, as described above and in the following. In general, an industrial automation and control system may comprise a plurality of sensors and/or actuators controlled by field devices that may be interconnected by a data communication network. In the field devices, applications may be run that control or interact with the sensors and/or actuators or with other field devices. With industrial automation and control system, an industrial process may be controlled, supervised and/or monitored. For example, the industrial control system may be a power plant, a power substation or a chemical plant.

The industrial automation and control system may comprise a database (which may be connected to the data communication network) for storing forensic analysis data generated by diagnosing applications running in the devices.

It has to be understood that features of the method as described in the above and in the following may be features of the system and the device as described in the above and in the following and vice versa.

### BRIEF DESCRIPTION OF THE DRAWINGS

The subject-matter of the invention will be explained in more detail in the following text with reference to exemplary embodiments which are illustrated in the attached drawings.
Fig. 1 schematically shows an industrial automation and control system according to an embodiment of the invention.
Fig. 2 schematically shows a device according to an embodiment of the invention.
Fig. 3 shows a flow diagram for a method for diagnosing a device in an automation and control system according to an embodiment of the invention.
Fig. 4 shows aspects of the device of Fig. 2.

In principle, identical parts are provided with the same reference symbols in the figures.

### DETAILED DESCRIPTION OF EXEMPLARY EMBODIMENTS

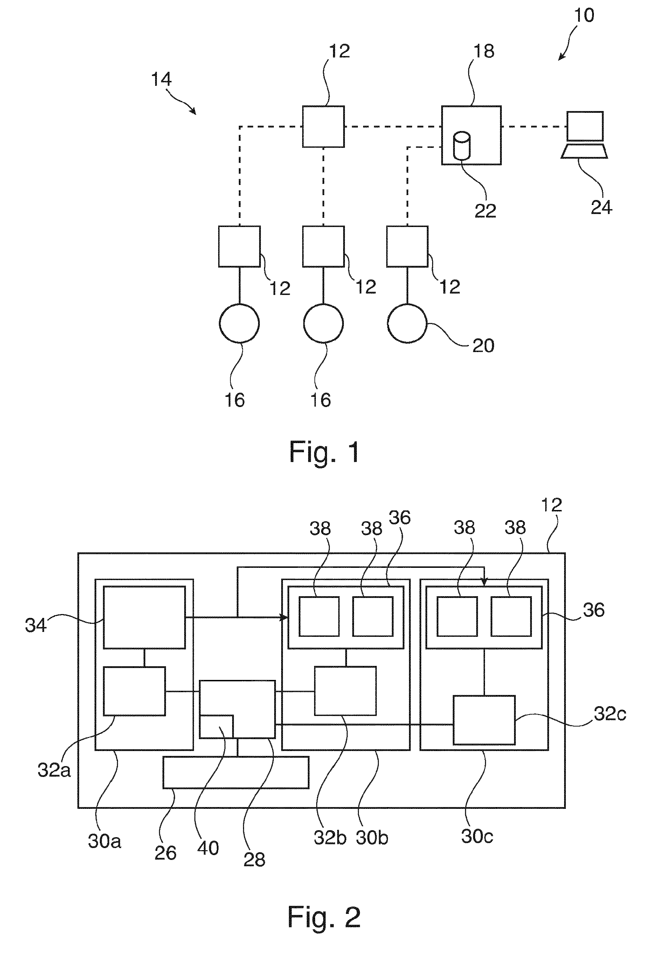

Fig. 1 shows an industrial automation and control system 10, which comprises a plurality of field devices 12 that are interconnected by a data communication network 14. The devices 12 may be configured for receiving measurement data from sensors 16 and forwarding this data to a central monitoring and control system 18 or for receiving control data from the central monitoring and control system 18 and for controlling actuators 20. For example, the industrial automation and control system 10 may be part of a power substation, the sensors 16 may be sensors for measuring electrical quantities like current and voltage and an actuator 20 may be a circuit breaker.

The devices 12 are configured to perform a self-diagnosis as described in the above and in the following. The analysis results of the self-diagnosis may be stored in a database 22 of the central system 18. The analysis results may be evaluated by an operator who may remotely connect to the system 18 via a computer 24.

Fig. 2 shows components of a device 12, which may be an embedded device with a processor and memory and further hardware 26 for providing resources to the processor such as a network interface, a non-volatile memory, etc.

The device 12 may comprise a hypervisor 28 that may be implemented in hardware or software. With the hypervisor 28, virtual machines 30a, 30b, 30c may be instantiated in the device 12. Each virtual machine 30a, 30b, 30c is provided with a virtual memory and, for example, further virtual resources, such as a virtual network interface 32a, 32b, 32c that are separated from each other by the hypervisor 28. I.e., the hypervisor manages the access of the one virtual machine 30a, 30b, 30c to the other.

In particular, the virtual machines 30b, 30c, do not have access to each other and to the virtual machine 30a. The virtual machine 30a only has a one-way, read-only access to the virtual machines 30b, 30c.

In the virtual machine 30a, a diagnosis application 34 is executed on an operating system, wherein the diagnosis application may be configured to perform a permanent virus scan on the virtual machines 30b, 30c and/or to generate hash codes from data and files inside the virtual machines 30b, 30c. In the virtual machines 30b, 30c, an operating system 36 is running, on which one or more industrial automation and control system applications 38 are being executed.

Furthermore, it has to be understood that only two virtual machines 30a, 30b may be instantiated in the device 12, one with the diagnosing application 34 and one with the industrial automation and control system application 38, which is analysed by the diagnosing application 34.

As an example, the applications 38 may perform control functions on the sensors 16 or actuators 20. The hypervisor 28 may provide virtual interfaces (based on real hardware interfaces) for the virtual machines 32b, 32c through which the applications 38 may access the sensors and/or actuators 20. Furthermore, the applications 38 may send and receive data via the virtual network interfaces 32b, 32c, which are provided by the hypervisor 28 and which are based on a real network interface of the device 12.

In general, the hypervisor 28 is the basis on which the diagnosing application 34 and the operating system 36 as well as the applications 38 run. The hypervisor 28 handles the access of the diagnosing application 34 to the operating system 36 and the applications 38 and it transfers network data to each of them via separated virtual network interface 32a, 32b, 32c.

The diagnosing application 34, the operating system 36 and the applications 38 cannot influence the operation of the hypervisor 28. Likewise, the diagnosing application 34 and the hypervisor 28 cannot interfere with the normal operation of the operating system 36 and the applications 38 running on it, which may prevent accurate computer forensics. Moreover, the operating system 36 may be bound to real-time constraints, which must be upheld even when running on top of the hypervisor 28.

The hypervisor 28 may comprise an authentication module 40, which may grant or deny access to the first virtual machine 30a. With the authentication module 40, an operator or an external process may access the diagnosing application 34, for example for downloading data and/or for configuring the diagnosing application 34.

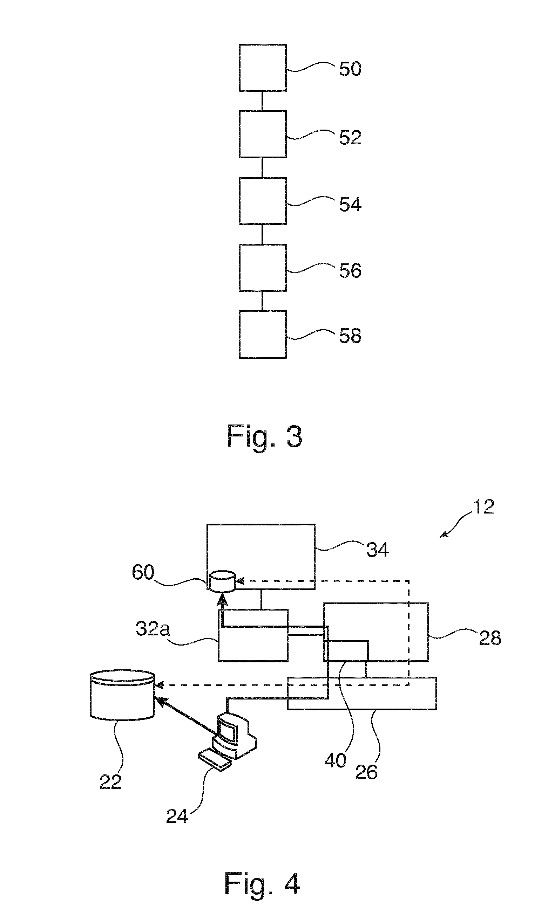

Fig. 3 shows a flow diagram for a method for diagnosing the device 12.

In step 50, the hypervisor 28 is started, for example after booting the device 12. The hypervisor 28 may be a hardware component of the device 12 or at least functions of the hypervisor 28 may be implemented in hardware. Alternatively, the hypervisor may be a software module that is run on the hardware of the device. For example, the device 12 may comprise a multi-core-processor with the hypervisor 28 running in a different processor core than the first and second virtual machines 30a, 30b.

In step 52, a first and a second virtual machine 30a, 30b are instantiated in the device 12 managed by a hypervisor 28. The first and second virtual machines 30a, 30b share hardware resources 26 of the device 12. The first virtual machine 30a and the second virtual machine 30b may be run in different processor cores of the multi-core-processor of the device 12.

In step 54, a diagnosing application 34 is run in the first virtual machine 30a and an industrial automation and control system application 38 is run in the second virtual machine30b. The diagnosing application 34 may run concurrently with the industrial automation and control system application 38. The application 38 may run on an operating system that is performed in the second virtual machine 30b.

Since only a read-only access from the first virtual machine 30a to the second virtual machine 30b is allowed by the hypervisor 28 and access from the second virtual machine 30b to the first virtual machine 30a is denied by the hypervisor 28, the operation of the diagnosing application 34 is completely transparent to the application 38.

The hypervisor 28 may only enable a read-only access to data stored in a virtual memory of the second virtual machine 30b and/or to files stored in a virtual drive of the second virtual machine 30b. In this context, read-only may mean that the diagnosing application 34 can only read state data from the operating system 36 or the application 38 (directly from a virtual memory provided/handled by the hypervisor 28 on behalf of the operating system 36) and that the diagnosing application 34 is prevented from modifying any data, which would affect the operating system 36 and/or the application 38.

In step 56, the diagnosing application 34 analyses the second virtual machine 30b and the application 38 running therein and identifies threats to the industrial automation and control system application38. The diagnosing application 34 accesses the virtual machine 30b, the operating system 36 and/or the applications 38 in order to perform a forensic analysis (for example for virus scan, file hash analysis and comparison).

For example, the diagnosing application 34 may perform a live forensic analysis of the second virtual machine 30b and/or the industrial automation and control system application 38. The diagnosing application 34 may analyse the data and/or the files of the second virtual machine 30b that are associated with the application 38.

For example, the diagnosing application 34 may inspect files by verifying their cryptographic signature, if it exists. Files without a signature may be hashed (using cryptographic hashes such as MD5, SHA-1, SHA-2 etc.), and then the hash may be compared to a database of hashes of known good files. All files of which a hash is listed in the database may be considered safe as they have not been modified. Inspection techniques may account for changes in the files/data that occur during regular operation of the industrial automation and control system 10. In a device 12 in an industrial automation and control system 10, stored data may change continuously and dynamically since process data may be recorded and stored, configuration parameters may be changed and events may be generated, modifying many legitimate files in the device 12.

Since the diagnosing application 34 and the operating system 36/the application 38 are completely separated, the hypervisor 28 may provide an access via a specific (communication) protocol, for example via the virtual network interfaces 32a, 32b. For example, the hypervisor may transfer data for the analysis from the second virtual machine 30b to the first virtual machine 30a via the first and second virtual network interfaces 32a, 32b.

Also with respect to Fig. 4, in step 58, the results of the forensic analysis may be stored in a local storage 60 of the diagnosing application and may be transferred via the hypervisor 28 to some external database 22.

For example, the results from the analysis may be transferred to an external database 22 via the virtual network interface 32a. Alternatively or additionally, the results of the analysis may be requested from the outside via the communication network 14.

A forensics expert or operator may access the results by retrieving from the external database 22 or by extracting them from the diagnosing application 34 directly. For this purpose, the hypervisor 28 may be equipped with an authentication module 40 that enables external access to the diagnosing application 34 via the virtual network interface 32a.

While an expert may connect to the diagnosing application remotely, an alternative solution is to provide a tool on the device 12 that allows an expert with physical access to the device 12 to get access to the forensic results. In this case, the tool may establish a direct connection to the authentication module 40 of the hypervisor 28, which enables the expert to access the data stored in the diagnosing application.

It is also possible that remote access to the diagnosing application 34 not only allows downloading the results of a forensic analysis, but to also interactively perform additional live forensic tasks and analysis.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method of diagnosing a device (12) in an automation and control system (10), the method comprising the steps of:
instantiating a first and a second virtual machine (30a, 30b) managed by a hypervisor (28), the first and second virtual machine sharing hardware resources (26) of the device (12);
enabling, by the hypervisor (28), a read-only access by the first virtual machine (30a) to information of the second virtual machine (30b);
running an industrial automation and control system application (38) in the second virtual machine (30b);
running, concurrently with the industrial automation and control system application (38), a diagnosing application (34) in the first virtual machine (30a) configured to analyze the information read from the second virtual machine (30b) and to identify threats to the industrial automation and control system application (38).

2. The method of claim 1, further comprising the step of:
denying access from the second virtual machine (30b) to the first virtual machine (30a) by the hypervisor.

3. The method of claim 1 or 2,
wherein the diagnosing application (34) and/or the analysis of the diagnosing application is not detectable in the second virtual machine (30b).

4. The method of one of the preceding claims,
wherein the diagnosing application (34) is configured to perform, periodically or continuously, a live forensic analysis of the second virtual machine (30b) and/or the industrial automation and control system application (38).

5. The method of one of the preceding claims, further comprising the steps of:
instantiating a third virtual machine (30c) and running a second industrial automation and control system application (38) in the third virtual machine (30c);
enabling access by the first virtual machine (30a) to the third virtual machine (30c).

6. The method of one of the preceding claims,
wherein the hypervisor (28) enables a read-only access to data stored in a virtual memory of the second virtual machine (30b) and/or to files stored in a virtual drive of the second virtual machine (30b);
wherein the diagnosing application (34) is configured to analyze the data and/or the files of the second virtual machine (30b).

7. The method of one of the preceding claims,
wherein an operating system (36) is executed in the second virtual machine (30b);
wherein the industrial automation and control system application (38) is configured to run on the operating system (36).

8. The method of one of the preceding claims, further comprising the steps of:
providing, by the hypervisor (28), a first virtual network interface (32a) for the first virtual machine (30a) and a second virtual network interface (32b) for the second virtual machine (30b);
transferring data for the analysis from the second virtual machine (30b) to the first virtual machine (30a) via the first and second virtual network interfaces; and/or
transferring a result from the analysis to an external database (22) via the virtual network interface (32a).

9. The method of claim 8,
wherein the hypervisor (28) comprises an authentication module (40) for accessing the first virtual machine (30a) and/or diagnosing application (34) in the first virtual machine via the first virtual network interface (32a).

10. The method of one of the preceding claims, further comprising the step of:
running the first virtual machine (30a) and the second virtual machine (30b) in different processor cores of a multi-core-processor of the device (12).

11. The method of one of the preceding claims, further comprising the step of:
running the hypervisor (28) in a different processor core as the first and second virtual machines (30a, 30b).

12. The method of one of the preceding claims,
wherein the hypervisor (28) is at least partially implemented in hardware in the device.

13. The method of one of the preceding claims,
wherein the diagnosing application (34) is configured for performing a virus scan of the second virtual machine (30b); and/or
wherein the diagnosing application (34) is configured for generating hash values of data and/or files of the industrial automation and control system application (38) and for comparing the hash values with verified hash values.

14. A device (12) of an industrial automation and control system (10), the device comprising:
a hypervisor (28) configured to instantiate a first and a second virtual machine (30a, 30b) managed by the hypervisor (28), such that the first and second virtual machine share hardware resources (26) of the device (12);
an industrial automation and control system application (38) configured to run in the second virtual machine (30b);
a diagnosing application (34) configured to run in the first virtual machine (30a) and configured to analyze the second virtual machine (30b) and to identify threats to the industrial automation and control system application (38);
wherein the hypervisor (28) is configured to enable a read-only access from the first virtual machine (30a) to the second virtual machine (30b).

15. An industrial automation and control system (10) comprising a plurality of devices (12) according to claim 14.
